# EUROPEAN PATENT SPECIFICATION

(11) **EP 4 465 225 B1**
(45) Date of publication and mention of the grant of the patent: **04.11.2026**
(21) Application number: 24172207.3
(22) Date of filing: 24.04.2024
(51) Int. Cl.: G06Q 10/30, G06Q 10/04, G06N 20/00, G16C 20/10, G16C 20/30, G16C 20/70, C10G 47/36, C10G 11/18

(54) **SYSTEMS, APPARATUSES, METHODS, AND COMPUTER PROGRAM PRODUCTS FOR MODELING PLANT RECYCLING PROCESSES**
SYSTEME, VORRICHTUNGEN, VERFAHREN UND COMPUTERPROGRAMMPRODUKTE ZUR MODELLIERUNG VON ANLAGENRECYCLINGVERFAHREN
SYSTÈMES, APPAREILS, PROCÉDÉS ET PRODUITS DE PROGRAMME INFORMATIQUE POUR MODÉLISER DES PROCESSUS DE RECYCLAGE D'INSTALLATION

(30) Priority: 17.05.2023 US 202318319035
(43) Date of publication of application: 20.11.2024
(73) Proprietor: Honeywell International Inc., Charlotte, NC 28202 (US)
(72) Inventor: LU, Joseph Z., Charlotte, 28202 (US)
(74) Representative: Haseltine Lake Kempner LLP

(56) References cited:
- US-A1- 2022 101 277

## Description

### TECHNOLOGICAL FIELD

Embodiments of the present disclosure relate generally to systems, apparatuses, methods, and computer program products for modeling plant recycling processes.

### BACKGROUND

Applicant has identified many technical challenges and difficulties associated with systems, apparatuses, methods, and computer program products for modeling plant recycling processes. Through applied effort, ingenuity, and innovation, Applicant has solved problems related to systems, apparatuses, methods, and computer program products for modeling plant recycling processes by developing solutions embodied in the present disclosure, which are described in detail below.
US 2022/101277 A1 relates to an end to end platform to manage circular economy of waste materials.

### BRIEF SUMMARY

The present invention is defined by the appended claims. Various embodiments described herein relate to systems, apparatuses, methods, and computer program products for modeling plant recycling processes.

In accordance with one aspect of the disclosure, a computer-implemented method is provided. In some embodiments, the computer-implemented method may include identifying physical representation data representing a physical layout of a recycling process associated with a plant. In some embodiments, the physical representation data comprises a physical representation of a plurality of physical components of the plant associated with the recycling process and a physical representation of a plurality of feed paths associated with the plurality of physical components of the plant associated with the recycling process. In some embodiments, the computer-implemented method may include generating a virtual recycling process model corresponding to the recycling process associated with the plant based at least in part on the physical representation data. In some embodiments, the computer-implemented method may include generating at least one recycling process optimization action based at least in part on the virtual recycling process model.

In some embodiments, the computer-implemented method may include initiating performance of the at least one recycling process optimization action.

In some embodiments, initiating performance of the at least one recycling process optimization action comprises causing operation of at least one of the plurality of physical components of the plant based at least in part on the at least one recycling process optimization action.

In some embodiments, the computer-implemented method may include causing a user interface to be displayed. In some embodiments, the user interface comprises at least one of the virtual recycling process model or the at least one recycling process optimization action.

In some embodiments, a first physical component of the plurality of physical components includes a first feed input and a first feed output and a second physical component of the plurality of physical components includes a second feed input and a second feed output.

In some embodiments, the first feed output is configured to output a first output feed and the second feed output is configured to output a second output feed.

In some embodiments, at least a portion of the first output feed is routed to the second feed input at least in part by a first recycle feed path of the plurality of feed paths and at least a portion of the second output feed is routed to the first feed input at least in part by a second recycle feed path of the plurality of feed paths.

In some embodiments, at least a portion of the first output feed is routed to a third physical component of the plurality of physical components and at least a portion of the second output feed is routed to a fourth physical component of the plurality of physical components.

In some embodiments, the first feed comprises at least one of naphtha, distillate, heavy distillate, or hydrocracker bottoms.

In some embodiments, the second feed comprises at least one of propane, butane, gasoline, light cycle oil, heavy gas oil, or slurry.

In some embodiments, the plurality of physical components of the plant comprises at least one of a fluid catalytic cracking component or a hydrocracking component.

In some embodiments, the recycling process is a multiple-input multiple-output recycling process.

In accordance with another aspect of the disclosure, an apparatus is provided. In some embodiments, the apparatus may include at least one processor and at least one non-transitory memory including computer-coded instructions thereon. In some embodiments, the computer-coded instructions, with the at least one processor, cause the apparatus to identify physical representation data representing a physical layout of a recycling process associated with a plant. In some embodiments, the physical representation data comprises a physical representation of a plurality of physical components of the plant associated with the recycling process and a physical representation of a plurality of feed paths associated with the plurality of physical components of the plant associated with the recycling process. In some embodiments, the computer-coded instructions, with the at least one processor, cause the apparatus to generate a virtual recycling process model corresponding to the recycling process associated with the plant based at least in part on the physical representation data. In some embodiments, the computer-coded instructions, with the at least one processor, cause the apparatus to generate at least one recycling process optimization action based at least in part on the virtual recycling process model.

In some embodiments, the computer-coded instructions, with the at least one processor, cause the apparatus to initiate performance of the at least one recycling process optimization action.

In some embodiments, initiating performance of the at least one recycling process optimization action comprises causing operation of at least one of the plurality of physical components of the plant based at least in part on the at least one recycling process optimization action.

In some embodiments, the computer-coded instructions, with the at least one processor, cause the apparatus to cause a user interface to be displayed. In some embodiments, the user interface comprises at least one of the virtual recycling process model or the at least one recycling process optimization action.

In some embodiments, a first physical component of the plurality of physical components includes a first feed input and a first feed output and a second physical component of the plurality of physical components includes a second feed input and a second feed output.

In some embodiments, the first feed output is configured to output a first output feed and the second feed output is configured to output a second output feed.

In some embodiments, at least a portion of the first output feed is routed to the second feed input at least in part by a first recycle feed path of the plurality of feed paths and at least a portion of the second output feed is routed to the first feed input at least in part by a second recycle feed path of the plurality of feed paths.

In some embodiments, at least a portion of the first output feed is routed to a third physical component of the plurality of physical components and at least a portion of the second output feed is routed to a fourth physical component of the plurality of physical components.

In some embodiments, the first feed comprises at least one of naphtha, distillate, heavy distillate, or hydrocracker bottoms.

In some embodiments, the second feed comprises at least one of propane, butane, gasoline, light cycle oil, heavy gas oil, or slurry.

In some embodiments, the plurality of physical components of the plant comprises at least one of a fluid catalytic cracking component or a hydrocracking component.

In some embodiments, the recycling process is a multiple-input multiple-output recycling process.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for identifying physical representation data representing a physical layout of a recycling process associated with a plant. In some embodiments, the physical representation data comprises a physical representation of a plurality of physical components of the plant associated with the recycling process and a physical representation of a plurality of feed paths associated with the plurality of physical components of the plant associated with the recycling process. In some embodiments, the computer program code, in execution with at least one processor, configures the computer program product for generating a virtual recycling process model corresponding to the recycling process associated with the plant based at least in part on the physical representation data. In some embodiments, the computer program code, in execution with at least one processor, configures the computer program product for generating at least one recycling process optimization action based at least in part on the virtual recycling process model.

In some embodiments, the computer program code, in execution with at least one processor, configures the computer program product for initiating performance of the at least one recycling process optimization action.

In some embodiments, initiating performance of the at least one recycling process optimization action comprises causing operation of at least one of the plurality of physical components of the plant based at least in part on the at least one recycling process optimization action.

In some embodiments, the computer program code, in execution with at least one processor, configures the computer program product for causing a user interface to be displayed. In some embodiments, the user interface comprises at least one of the virtual recycling process model or the at least one recycling process optimization action.

In some embodiments, a first physical component of the plurality of physical components includes a first feed input and a first feed output and a second physical component of the plurality of physical components includes a second feed input and a second feed output.

In some embodiments, the first feed output is configured to output a first output feed and the second feed output is configured to output a second output feed.

In some embodiments, at least a portion of the first output feed is routed to the second feed input at least in part by a first recycle feed path of the plurality of feed paths and at least a portion of the second output feed is routed to the first feed input at least in part by a second recycle feed path of the plurality of feed paths.

In some embodiments, at least a portion of the first output feed is routed to a third physical component of the plurality of physical components and at least a portion of the second output feed is routed to a fourth physical component of the plurality of physical components.

In some embodiments, the first feed comprises at least one of naphtha, distillate, heavy distillate, or hydrocracker bottoms.

In some embodiments, the second feed comprises at least one of propane, butane, gasoline, light cycle oil, heavy gas oil, or slurry.

In some embodiments, the plurality of physical components of the plant comprises at least one of a fluid catalytic cracking component or a hydrocracking component.

In some embodiments, the recycling process is a multiple-input multiple-output recycling process.

The above summary is provided merely for purposes of summarizing some example embodiments to provide a basic understanding of some aspects of the present disclosure.

### BRIEF DESCRIPTION OF THE DRAWINGS

Reference will now be made to the accompanying drawings.
FIG. 1 illustrates an exemplary block diagram of an environment in which embodiments of the present disclosure may operate;
FIG. 2 illustrates an exemplary block diagram of an example apparatus that may be specially configured in accordance with an example embodiment of the present disclosure;
FIG. 3 illustrates an example visualization of physical representation data in accordance with one or more embodiments of the present disclosure;
FIG. 4 illustrates an example visualization of a virtual recycling process model in accordance with one or more embodiments of the present disclosure;
FIG. 5 illustrates another example visualization of a virtual recycling process model in accordance with one or more embodiments of the present disclosure;
FIG. 6 illustrates an example user interface configuration in accordance with one or more embodiments of the present disclosure;
FIG. 7 illustrates another example user interface configuration in accordance with one or more embodiments of the present disclosure;
FIG. 8 illustrates another example user interface configuration in accordance with one or more embodiments of the present disclosure; and
FIG. 9 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with systems, apparatuses, methods, and computer program products for modeling plant recycling processes. As would be understood by one skilled in the field to which this disclosure pertains, there are numerous example scenarios in which a user may use systems, apparatuses, methods, and computer program products for modeling plant recycling processes.

In many applications, systems, apparatuses, methods, and computer program products for modeling plant recycling processes are necessary. For example, a plant may include a plurality of physical components (e.g., a hydrocracking component) that each may be configured to perform a particular operation for transforming, storing, releasing, and/or otherwise handling one or more input ingredients to create one or more processed products. In some examples, when performing a particular operation for transforming, storing, releasing, and/or otherwise handling one or more input ingredients to create one or more processed products each of the plurality of physical components may be configured such that they create one or more byproducts (e.g., byproducts being products created by a physical component from one or more input ingredients that are not the one or more processed products). As such, in some examples, a plant may be configured to recycle the byproducts to create one or more processed products from the byproducts. In some examples, a model of the plant recycling process may be generated in order to enable the plant to perform the recycling process in an efficient and cost effective manner.

Example solutions for modeling plant recycling processes include, for example, generating a model in which the byproducts created by a physical component, are combined with fresh input ingredients for the physical component and the physical component reprocesses the byproducts together with the fresh input ingredients to create processed products. For example, a fluid catalytic cracking component may be configured such that it receives unprocessed hydrocarbons (e.g., unrefined oil) as an input ingredient, creates gasoline as a processed product, and creates heavy gas oil as a byproduct. Although it may be technically possible to recycle the byproduct heavy gas oil by reprocessing it in the fluid catalytic cracking component to create the processed product gasoline, it may be more efficient and cost effective for the plant to recycle the byproduct created by the fluid catalytic cracking component (e.g., heavy gas oil) using another physical component of the plant. For example, it may be more efficient to recycle the byproduct heavy gas oil using a hydrocracking component. Similarly, it may be more efficient and cost effective to recycle a byproduct created by the hydrocracking component with the fluid catalytic cracking component and/or another physical component of the plant. Said differently, in order to operate in an efficient and cost effective manner, plants may use multiple-input multiple-output recycling processes in which byproducts created by one physical component are recycled by a different physical component of the plant. However, no such solution exists for modeling such recycling processes. That is, example solutions for modeling recycling processes only include modeling recycling processes in which the byproducts are recycled by the same physical component that created the byproduct.

Thus, to address these and/or other issues related to systems, apparatuses, methods, and computer program products for modeling plant recycling processes, example systems, apparatuses, methods, and computer program product for modeling plant recycling processes are disclosed herein. For example, an embodiment in this disclosure, described in greater detail below, includes a computer-implemented method that includes identifying physical representation data representing a physical layout of a recycling process associated with a plant. In some embodiments, the physical representation data includes a physical representation of a plurality of physical components of the plant associated with the recycling process and a physical representation of a plurality of feed paths associated with the plurality of physical components of the plant associated with the recycling process. In some embodiments, the computer-implemented method may include generating a virtual recycling process model corresponding to the recycling process associated with the plant based at least in part on the physical representation data. In some embodiments, the computer-implemented method may include generating at least one recycling process optimization action based at least in part on the virtual recycling process model. Accordingly, the systems, apparatuses, methods, and computer program products described herein enable modeling of numerous recycling processes, such as multiple-input multiple-output recycling processes in which a byproduct created by one physical component of the plant is recycled by another physical component of the plant.

### Example Systems and Apparatuses

Embodiments of the present disclosure herein include systems, apparatuses, methods, and computer program products configured for modeling plant recycling processes.

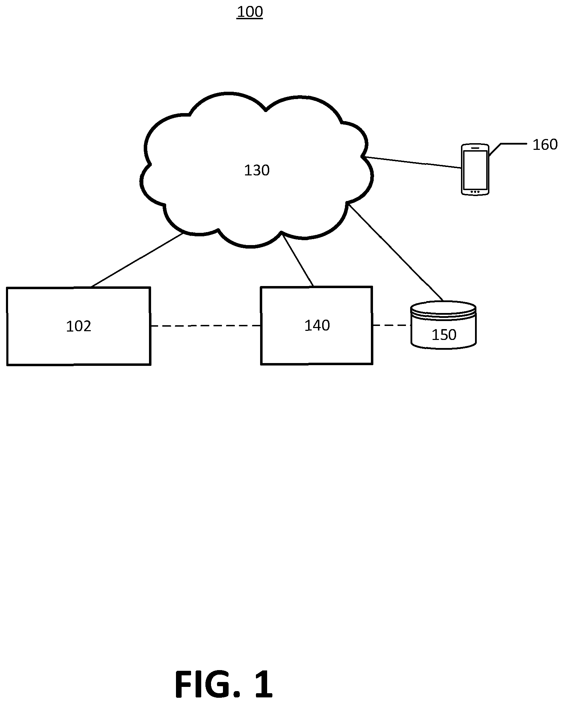

FIG. 1 illustrates an exemplary block diagram of an environment 100 in which embodiments of the present disclosure may operate. Specifically, FIG. 1 illustrates a plant 102. In some embodiments, for example, the plant 102 may be any type of plant associated with a user associated with the environment 100. In this regard, the plant 102 may, for example, be a processing plant that receives and processes ingredients as inputs to create a processed product, such as a hydrocarbon processing plant, a refinery, a pulp and paper plant, a chemical plant, an alumina plant, a drilling facility, a fracking field, and/or the like.

The plant 102 in some embodiments includes any number of individual components. The components of the plant 102 may perform a particular function during operation of the plant 102. For example, the components may include one or more well components, fracking components, crude processing components, hydrotreating components, isomerization components, vapor recovery components, fluid catalytic cracking components, hydrocracking components, aromatics reduction components, visbreaker components, storage tank components, blender components, pump components, flash venting components, compressor components, cooler components (e.g., air cooler components), sensor components, storage components, flare components, heating, ventilation, and air (HVAC) components, lighting components, and/or the like that perform a particular operation for transforming, storing, releasing, and/or otherwise handling one or more input ingredient(s) (e.g., hydrocarbons, gases, etc.). In this regard, for example, the individual components of a plant may include components associated with a particular process performed by the plant (e.g., a hydrocarbon recycling processing).

In some embodiments, each individual component of the plant 102 is associated with a determinable location. The determinable location of a particular component in some embodiments represents an absolute position (e.g., GPS coordinates, latitude, and longitude locations, and/or the like) or a relative position (e.g., a point representation of the location of a component from a local origin point corresponding to the plant 102). In some embodiments, a component includes or otherwise is associated with a location sensor and/or software-driven location services that provide the location data representing the location corresponding to that component. In other embodiments the location of a component is stored and/or otherwise predetermined within a software environment, provided by a user and/or otherwise determinable to one or more systems.

Additionally or alternatively, in some embodiments, the plant 102 itself is associated with a determinable location. The determinable location of the plant 102 in some embodiments represents an absolute position (e.g., GPS coordinates, latitude and longitude locations, an address, and/or the like) or a relative position of the plant 102 (e.g., an identifier representing the location of the plant 102 as compared to one or more other plants, an enterprise headquarters, or general description in the world for example based at least in part on continent, state, or other definable region). In some embodiments, the plant 102 includes or otherwise is associated with a location sensor and/or software-driven location services that provide the location data corresponding to the plant 102. In other embodiments, the location of the plant 102 is stored and/or otherwise determinable to one or more systems.

The network 130 may be embodied in any of a myriad of network configurations. In some embodiments, the network 130 may be a public network (e.g., the Internet). In some embodiments, the network 130 may be a private a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 may include a plant optimization system 140. In some embodiments, for example, the plant optimization system 140 may be configured to model plant recycling process. The plant optimization system 140 may be electronically and/or communicatively coupled to the plant 102, individual components of the plant 102, one or more databases 150, and/or one or more user devices 160. The plant optimization system 140 may be located remotely, in proximity of, and/or within the plant 102. In some embodiments, the plant optimization system 140 is configured via hardware, software, firmware, and/or a combination thereof, to perform data intake of one or more types of data associated with one or more of the plant 102. Additionally or alternatively, in some embodiments, the plant optimization system 140 is configured via hardware, software, firmware, and/or a combination thereof, to generate and/or transmit command(s) that control, adjust, or otherwise impact operations of one or more of the plant 102 or specific component(s) thereof, for example for controlling one or more operations of the plant 102. Additionally or alternatively still, in some embodiments, the plant optimization system 140 is configured via hardware, software, firmware, and/or a combination thereof, to perform data reporting and/or other data output process(es) associated with monitoring or otherwise analyzing operations of one or more of the plant 102 or specific component(s) thereof, for example for generating and/or outputting report(s) corresponding to the operations performed via the plant 102. For example, in various embodiments, the plant optimization system 140 may be configured to execute and/or perform one or more operations and/or functions described herein.

The one or more databases 150 may be configured to receive, store, and/or transmit data. In some embodiments, the one or more databases 150 may be associated with physical representation data associated with the plant 102. In some embodiments, the physical representation data may be received from the plant 102. In this regard, for example, the plant 102 may have one or more sensors that capture physical representation data and/or one or more datastores that store physical representation data. In some embodiments, the physical representation data may be received from the plant optimization system 140. In this regard, for example, the plant optimization system 140 may be configured to identify physical representation data associated with the plant 102. In some embodiments, the one or more databases 150 may be associated with physical representation data received from the plant 102 and/or the plant optimization system 140 in real-time. Additionally or alternatively, the one or more databases 150 may be associated with physical representation data received from the plant 102 and/or the plant optimization system 140 on a periodic basis (e.g., the physical representation data may be received from the plant 102 and/or the plant optimization system 140 once per day). Additionally or alternatively, the one or more databases 150 may be associated with historical physical representation received from the plant 102 and/or the plant optimization system 140 (e.g., physical representation previously received from the plant 102 and/or the plant optimization system 140). Additionally or alternatively, the one or more databases 150 may be associated with physical representation data received from the plant 102 and/or the plant optimization system 140 in response to a request for the physical representation data. Additionally or alternatively, the one or more databases 150 may be associated with physical representation data inputted (e.g., by a user) into the plant optimization system 140 and/or the one or more user devices 160.

The one or more user devices 160 may be associated with users of the plant optimization system 140. In various embodiments, the plant optimization system 140 may generate and/or transmit a message, alert, or indication to a user via a user device 160. Additionally, or alternatively, a user device 160 may be utilized by a user to remotely access the plant optimization system 140. This may be by, for example, an application operating on the user device 160. A user may access the plant optimization system 140 remotely, including one or more visualizations, reports, and/or real-time displays.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the plant optimization system 140 may include the one or more databases 150, which may collectively be located in or at the plant 102.

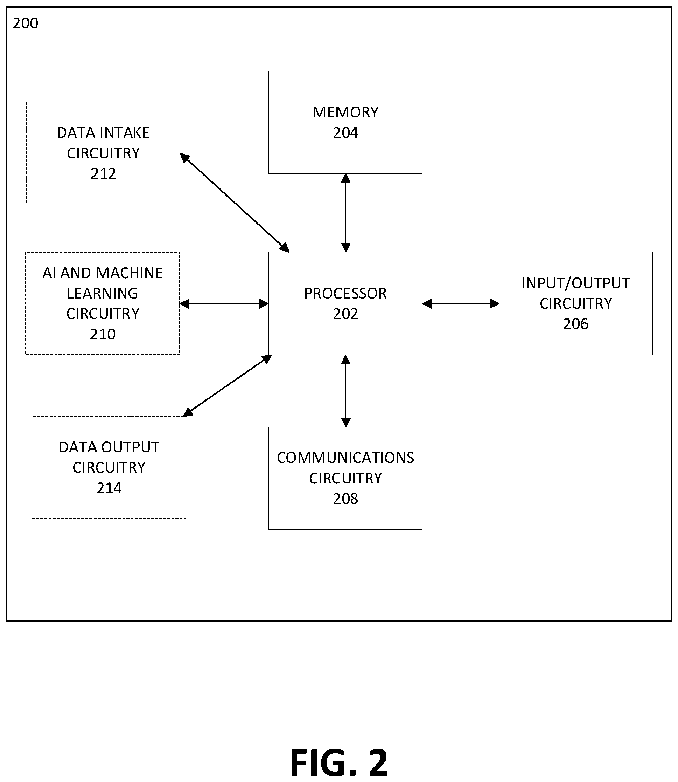

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud based computing apparatus, a specifically configured embedded computing device (e.g., configured for edge computing, and/or the like). Examples of an apparatus 200 may include, but is not limited to, a plant optimization system 140, the one or more databases 150, and/or a user device 160. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of a plant optimization system 140 or of a user device 160 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the plant 102. In some embodiments, the data intake circuitry 212 includes hardware, software, firmware, and/or a combination thereof, that communicates with one or more sensor(s) component(s), and/or the like within the plant 102 to receive particular data associated with such operations of the plant 102. Additionally or alternatively, in some embodiments, the data intake circuitry 212 includes hardware, software, firmware, and/or a combination thereof, that retrieves particular data associated with the plant 102 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured to facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect the AI and machine learning circuitry 210.

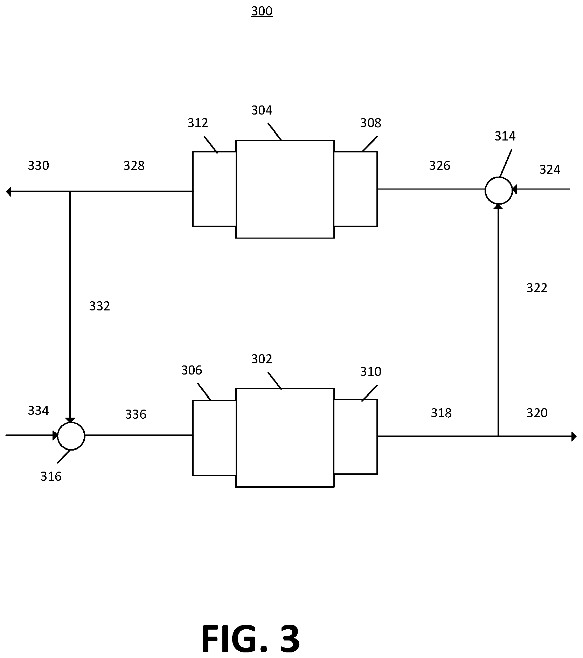

With reference to FIGS. 1-8, in some embodiments, the plant optimization system 140 may be configured to identify physical representation data representing a physical layout of a recycling process associated with the plant 102. In this regard, for example, FIG. 3 illustrates a visualization 300 of the physical representation data. Specifically, FIG. 3 includes a visualization 300 of physical representation data that represents a physical layout of a recycling process associated with the plant 102. In this regard, for example, the physical representation data may represent a physical layout of a multiple-input multiple-output recycling processed associated with the plant 102.

In some embodiments, the physical representation data includes a physical representation of a plurality of physical components of the plant 102, such as physical components of the plant 102 that are associated with a recycling process performed by the plant 102 and/or the plurality of physical components of the plant 102. For example, as illustrated in FIG. 3, the physical representation data may include a first physical component 302 of the plurality of physical components and a second physical component 304 of the plurality of physical components. That is, the first physical component 302 and the second physical component 304 may be components of the plurality of physical components of the plant configured to at least in part perform a recycling process associated with the plant 102. For example, the first physical component 302 may be configured to recycle at least some of the byproducts created by the second physical component 304 and the second physical component 304 may be configured to recycle at least some of the byproducts created by the first physical component 302 (e.g., a multiple-input multiple-output recycling process). In some embodiments, for example, the first physical component 302 may be a hydrocracking component (e.g., a hydrocracker) and the second physical component 304 may be a fluid catalytic cracking component (e.g., a fluid catalytic cracker).

In some embodiments, each of the plurality of physical components may be configured to perform a particular operation for transforming, storing, releasing, and/or otherwise handling one or more input ingredients to create one or more processed products. In some embodiments, when performing a particular operation for transforming, storing, releasing, and/or otherwise handling one or more input ingredients to create one or more processed products each of the plurality of physical components may be configured to create one or more byproducts (e.g., byproducts being products created by a component from one or more input ingredients that are not the one or more processed products). Said differently, each of the plurality of physical components may be configured to receive an input feed having one or more input ingredients and output an output feed having one or more processed products and/or one or more byproducts.

In this regard, for example, the first physical component 302 of the plurality of physical components may be configured to receive a first input feed having input ingredients associated with the first physical component 302. For example, if the first physical component 302 is a hydrocracking component, the first input feed may include one or more hydrocarbons (e.g., unrefined oil, minimally refined oil, etc.). Similarly, for example, the second physical component 304 of the plurality of physical components may be configured to receive a second input feed having input ingredients associated with the second physical component 304. For example, if the second physical component 304 is a fluid catalytic cracking component, the second input feed may include one or more hydrocarbons (e.g., unrefined oil, minimally refined oil, etc.).

In some embodiments, for example, the first physical component 302 of the plurality of physical components may be configured to output a first output feed having one or more processed products. For example, if the first physical component 302 is a hydrocracking component, the first output feed may include distillate (e.g., distillate being a processed product). Additionally or alternatively, the first physical component 302 of the plurality of physical components may be configured to output a first output feed having one or more byproducts. For example, if the first physical component 302 is a hydrocracking component, the first output feed may include one or more of naphtha, heavy distillate, and/or hydrocracker bottoms (e.g., naphtha, heavy distillate, and/or hydrocracker bottoms being byproducts).

In some embodiments, for example, the second physical component 304 of the plurality of physical components may be configured to output a second output feed having one or more processed products. For example, if the second physical component 304 is a fluid catalytic cracking component, the second output feed may include gasoline (e.g., gasoline being a processed product). Additionally or alternatively, the second physical component 304 of the plurality of physical components may be configured to output a second output feed having one or more byproducts. For example, if the second physical component 304 is a fluid catalytic cracking component, the second output feed may include one or more of propane, butane, light cycle oil, heavy gas oil, and/or slurry (e.g., propane, butane, light cycle oil, heavy gas oil, and/or slurry being byproducts).

In some embodiments, each of the plurality of physical components may be include a feed input and/or a feed output. For example, the first physical component 302 may include a first feed input 306 and a first feed output 310. As another example, the second physical component 304 may include a second feed input 308 and a second feed output 312. In this regard, for example, the first feed input 306 may be configured to receive the first input feed into the first physical component 302 (e.g., unrefined oil, minimally refined oil, etc.) and the first feed output 310 may be configured to output the first output feed from the first physical component 302 (e.g., distillate, naphtha, heavy distillate, and/or hydrocracker bottoms). Similarly, for example, the second feed input 308 may be configured to receive the second input feed into the second physical component 304 (e.g., unrefined oil, minimally refined oil, etc.) and the second feed output 312 may be configured to output the second output feed from the second physical component 304 (e.g., gasoline, propane, butane, light cycle oil, heavy gas oil, and/or slurry).

In some embodiments, the physical representation data includes a physical representation of a plurality of feed paths associated with the plurality of physical components of the plant 102, such as a plurality of feed paths associated with physical components of the plant 102 that are associated with a recycling process performed by the plant 102 and/or the plurality of physical components of the plant 102.

In some embodiments, the plurality of feed paths may include a first output feed path 318. In some embodiments, the first output feed path 318 may be in communication with the first feed output 310. In this regard, for example, the first output feed path 318 may be configured to receive the first output feed from the first feed output 310. For example, when the first physical component 302 is a hydrocracking component, the first output feed path 318 may be configured to receive the first feed output 310 having one or more processed products and/or one or more byproducts associated with the first physical component 302 (e.g., distillate, naphtha, heavy distillate, and/or hydrocracker bottoms).

In some embodiments, the plurality of feed paths may include a second output feed path 328. In some embodiments, the second output feed path 328 may be in communication with the second feed output 312. In this regard, for example, the second output feed path 328 may be configured to receive the second output feed from the second feed output 312. For example, when the first physical component 302 is a fluid catalytic cracking component, the second output feed path 328 may be configured to receive the second feed output 312 having one or more processed products and/or one or more byproducts associated with the second physical component 304 (e.g., gasoline, propane, butane, light cycle oil, heavy gas oil, and/or slurry).

In some embodiments, the plurality of feed paths may include a first processed feed path 320. In some embodiments, the first processed feed path 320 may be in communication with the first output feed path 318. In this regard, for example, the first processed feed path 320 may be configured to receive at least a portion of the first output feed from the first output feed path 318. Said differently, the first processed feed path 320 may be configured to receive the one or more processed products associated with the first physical component 302 in the first output feed from the first output feed path 318, such as distillate (e.g., the first processed feed path 320 may receive the processed products and may not receive at least some of the byproducts).

In some embodiments, the first processed feed path 320 may be configured to at least in part route at least a portion of the first output feed (e.g., at least the portion of the first output feed having the processed products) to another of the plurality of physical components of the plant 102 (e.g., a third component of the plurality of physical components of the plant 102). For example, the first processed feed path 320 may be configured to route the portion of the first output feed to a storage component (e.g., the portion may be placed in storage until it can be consumed, sold, etc.). As another example, the first processed feed path 320 may be configured to route the portion of the first output feed to a pump component such that the portion of the first output feed may be transferred to a different part of the plant 102.

In some embodiments, the plurality of feed paths may include a second processed feed path 330. In some embodiments, the second processed feed path 330 may be in communication with the second output feed path 328. In this regard, for example, the second processed feed path 330 may be configured to receive at least a portion of the second output feed from the second output feed path 328. Said differently, the second processed feed path 330 may be configured to receive the one or more processed products associated with the second physical component 304 in the second output feed from the second output feed path 328, such as gasoline (e.g., the second processed feed path 330 may receive the processed products and may not receive at least some of the byproducts).

In some embodiments, the second processed feed path 330 may be configured to at least in part route at least a portion of the second output feed (e.g., the portion of the second output feed having the processed products) to another of the plurality of physical components of the plant 102 (e.g., a fourth component of the plurality of physical components of the plant 102). For example, the second processed feed path 330 may be configured to route the portion of the second output feed to a storage component (e.g., the portion may be placed in storage until it can be consumed, sold, etc.). As another example, the second processed feed path 330 may be configured to route the portion of the second output feed to a pump component such that the portion of the second output feed may be transferred to a different part of the plant 102.

In some embodiments, the plurality of feed paths may include a first recycle feed path 322. In some embodiments, the first recycle feed path 322 may be in communication with the first output feed path 318. In this regard, for example, the first recycle feed path 322 may be configured to receive at least a portion of the first output feed from the first output feed path 318. Said differently, the first recycle feed path 322 may be configured to receive at least one of the one or more byproducts associated with the first physical component 302 in the first output feed from the first output feed path 318. For example, when the first physical component 302 is a hydrocracking component, the first recycle feed path 322 may receive at least one of naphtha, heavy distillate, and/or hydrocracker bottoms. (e.g., the first recycle feed path 322 does not receive the processed products).

In some embodiments, the first recycle feed path 322 may be configured to at least in part route at least a portion of the second output feed (e.g., a portion of the second output feed having at least one of the byproducts) to a first combiner 314. In some embodiments, the first combiner 314 may be configured to combine the portion of the second output feed received from the first recycle feed path 322 with a second fresh feed received by the first combiner 314 from a second fresh feed path 324. In some embodiments, the second fresh feed may be one or more input ingredients (e.g., unprocessed hydrocarbons). In this regard, for example, the first combiner 314 may be configured to combine at least one of the byproducts created by the first physical component 302 with one or more input ingredients associated with the second physical component 304 to create the second input feed (e.g., the second input feed being an input for the second physical component 304). In some embodiments, the first combiner 314 may be in communication with a second input feed path 326 configured to provide the second input feed to the second physical component 304.

In some embodiments, the plurality of feed paths may include a second recycle feed path 332. In some embodiments, the second recycle feed path 332 may be in communication with the second output feed path 328. In this regard, for example, the second recycle feed path 332 may be configured to receive at least a portion of the second output feed from the second output feed path 328. Said differently, the second recycle feed path 332 may be configured to receive at least one of the one or more byproducts associated with the second physical component 304 in the second output feed from the second output feed path 328. For example, when the first physical component 302 is a fluid catalytic cracking component, the second recycle feed path 332 may receive at least one of naphtha, heavy distillate, and/or hydrocracker bottoms. (e.g., the second recycle feed path 332 does not receive the processed products).

In some embodiments, the second recycle feed path 332 may be configured to at least in part route at least a portion of the second output feed (e.g., a portion of the second output feed having at least one of the byproducts) to a second combiner 316. In some embodiments, the second combiner 316 may be configured to combine the portion of the second output feed received from the second recycle feed path 332 with a first fresh feed received by the second combiner 316 from a first fresh feed path 334. In some embodiments, the first fresh feed may be one or more input ingredients (e.g., unprocessed hydrocarbons). In this regard, for example, the second combiner 316 may be configured to combine at least one of the byproducts created by the second physical component 304 with one or more input ingredients associated with the first physical component 302 to create the first input feed (e.g., the first input feed being an input for the first physical component 302). In some embodiments, the second combiner 316 may be in communication with a first input feed path 336 configured to provide the first input feed to the first physical component 302.

In some embodiments, the plurality of physical components (e.g., the first physical component 302 and the second physical component 304) may be configured to recycle at least some of the byproducts created by the plurality of physical components. In this regard, for example, the plurality of physical components may be configured to perform a multiple-input multiple-output recycling process in which byproducts created by one of the plurality of physical components are recycled by another of the plurality of physical components. For example, at least some of the byproducts created by the first physical component 302 may be recycled by the second physical component 304 (e.g., at least one of the byproducts created by the first physical component 302 are processed by the second physical component 304) and at least some of the byproducts created by the second physical component 304 may be recycled by the first physical component 302 (e.g., at least one of the byproducts created by the second physical component 304 are processed by the second physical component 304). In some embodiments, a multiple-input multiple-output recycling process may be more efficient than a recycling process in which byproducts are recycled by the same component that created the byproduct. For example, when the first physical component 302 is a fluid catalytic cracking component, the first physical component 302 may create heavy gas oil as a byproduct. The first physical component 302 may be configured to recycle heavy gas oil, however, when the second physical component 304 is a hydrocracking component, the second physical component 304 may be more efficient at recycling heavy gas oil than the first physical component 302. In this regard, by enabling the second physical component 304 to recycle a byproduct (e.g., heavy gas oil) created by the first physical component 302, the plant 102 may be able to perform a recycling process in a more efficient and cost effective manner.

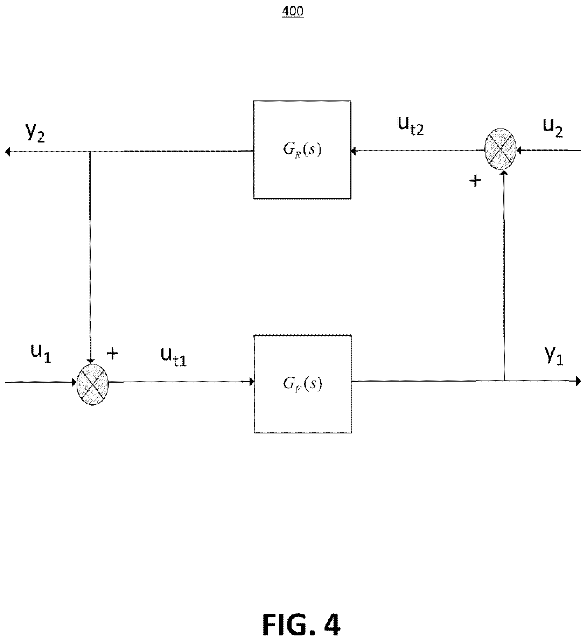

In some embodiments, the plant optimization system 140 may be configured to generate a virtual recycling process model corresponding to the recycling process associated with the plant 102 based at least in part on the physical representation data. In this regard, for example, FIG. 4 illustrates a visualization 400 of the virtual recycling process model. In some embodiments, for example, the virtual recycling process model includes a gain G_{F}(s) associated with a forward path processing. In this regard, for example, the gain G_{F}(s) may be a virtual representation of at least one of the plurality of physical components performing a particular operation for transforming, storing, releasing, and/or otherwise handling one or more input ingredients to create one or more processed products and/or byproducts. In some embodiments, the gain G_{F}(s) may be derived at least in part from the physical representation data. In some embodiments, the virtual recycling process model includes a gain G_{R}(s) associated with a recycling path processing. In this regard, for example, the gain G_{R}(s) may be a virtual representation of at least one of the plurality of physical components one of the plurality of physical components performing a particular operation for transforming, storing, releasing, and/or otherwise handling one or more byproducts to create one or more processed products and/or other byproducts. In some embodiments, the gain G_{R}(s) may be derived at least in part from the physical representation data.

In some embodiments, the virtual recycling process model may include virtual representations of one or more of the plurality of feed paths. For example, the virtual recycling process model may include a virtual representation u₁ of the first fresh feed path 334. As another example, the virtual recycling process model may include a virtual representation uₜ₁ of the first input feed path 336 (e.g., the combination of the first fresh feed path 334 and second recycle feed path 332 as combined by the second combiner 316). As another example, the virtual recycling process model may include a virtual representation u₂ of the second fresh feed path 324. As another example, the virtual recycling process model may include a virtual representation uₜ₂ of the second input feed path 326 (e.g., the combination of the second fresh feed path 324 and first recycle feed path 322 as combined by the first combiner 314). As another example, the virtual recycling process model may include a virtual representation y₁ of the first processed feed path 320. As another example, the virtual recycling process model may include a virtual representation y₂ of the second processed feed path 330.

In some embodiments, based at least in part on the virtual recycling process model (e.g., based on G_{F}(s), G_{R}(s), u₁, uₜ₁, u₂, uₜ₂,), the plant optimization system 140 may be configured to generate a sensitivity function associated with the recycling process, which is illustrated below as equation (1): $\left[\begin{matrix}{u}_{t 1} \left(s\right) \\ {u}_{t 2} \left(s\right)\end{matrix}\right] = \frac{1}{1 - {G}_{F} \left(s\right) {G}_{R} \left(s\right)} \left[\begin{matrix}{u}_{1} \left(s\right) + {G}_{R} \left(s\right) {u}_{2} \left(s\right) \\ {u}_{2} \left(s\right) + {G}_{F} \left(s\right) {u}_{1} \left(s\right)\end{matrix}\right] ,$ (1)

In some embodiments, based at least in part on the virtual recycling process model and/or the sensitivity function associated with the recycling process, the plant optimization system 140 may be configured to generate a complimentary sensitivity function associated with the first processed feed path 320, which is illustrated below as equation (2): ${y}_{1} \left(s\right) = {G}_{F} \left(s\right) {u}_{t 1} \left(s\right) ,$ (2)

In some embodiments, based at least in part on the virtual recycling process model and/or the sensitivity function associated with the recycling process, the plant optimization system 140 may be configured to generate a complimentary sensitivity function associated with the second processed feed path 330, which is illustrated below as equation (3): ${y}_{2} \left(s\right) = {G}_{R} \left(s\right) {u}_{t 2} \left(s\right) ,$ (3)

In some embodiments, the plant optimization system 140 may be configured to generate at least one recycling process optimization action based at least in part on the virtual recycling process model, for example, using at least in part equations (1)-(3) shown above (e.g., even if G_{F}(s) or G_{R}(s) is equal to 1). In some embodiments, for example, the at least one recycling process optimization action may include generating an optimized amount of a particular processed product (e.g., gasoline) in a particular time interval (e.g., maximize and/or minimize a particular processed product in a particular time interval). For example, the at least one recycling process optimization action may include generating an optimized amount of a particular processed product in a particular time interval to maximize profit for the plant 102. As another example, the at least one recycling process optimization action may include generating an optimized amount of a particular processed product in a particular time interval to minimize waste created by the plant 102. As another example, the at least one recycling process optimization action may include generating an optimized amount of a particular processed product in a particular time interval to minimize costs for the plant 102.

In some embodiments, for example, the at least one recycling process optimization action may be used to configure one or more of the plurality of physical components (e.g., the hydrocracking component) of the plant 102 in order to optimize profit, cost, or waste generated by the one or more of the plurality of physical components of the plant 102 and/or the profit, cost, or waste generated by the plant 102 overall. For example, the at least one recycling process optimization action may be used to configure one or more of the plurality of physical components of the plant 102 such that the one or more of the physical components generate a target processed product amount that optimizes the profit, cost, and/or waste generated by the one or more of the plurality of physical components of the plant 102 and/or the profit, cost, and/or waste generated by the plant 102 overall (e.g., a target amount of processed product for the first physical component 302 to generate).

In some embodiments, the plant optimization system 140 may be configured to initiate performance of the at least one recycling process optimization action. In this regard, for example, initiating performance of the at least one recycling process optimization action may include causing operation of at least one of the plurality of physical components of the plant based at least in part on the at least one recycling process optimization action. In this regard, for example, the plant optimization system 140 may be configured to cause at least one of the plurality of physical components to generate a particular amount of a particular processed product in a particular time interval based at least in part on the at least one recycling process optimization action. For example, the plant optimization system 140 may be configured to cause the first physical component 302 (e.g., a hydrocracking component) to create a particular amount of a processed product (e.g., distillate) based on input ingredients from the first fresh feed path 334 and the second recycle feed path 332 during a twenty four hour time interval.

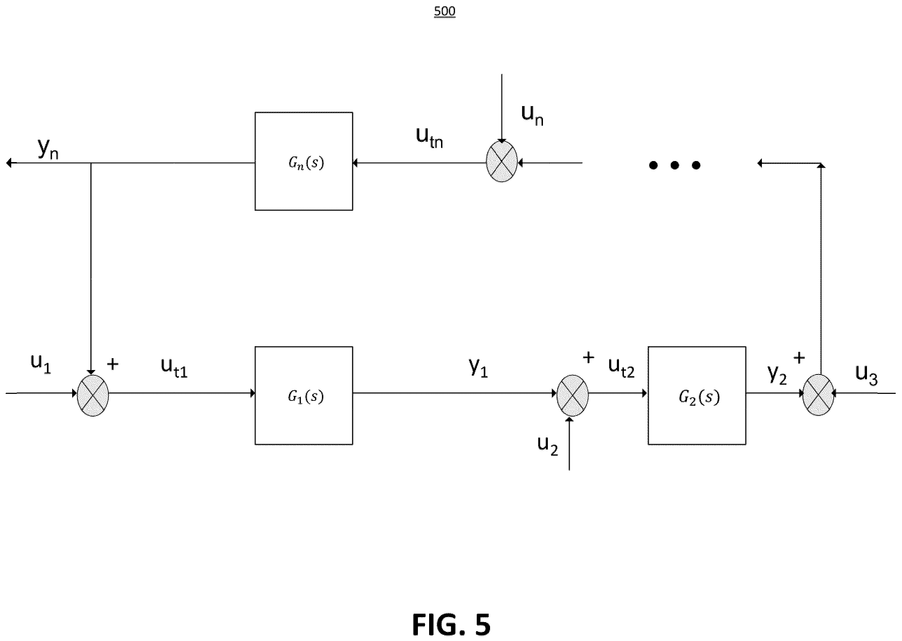

In some embodiments, the physical representation data may include a representation of a plurality of physical components of the plant 102 that includes more than two physical components (e.g., more than the first physical component 302 and the second physical component 304). In this regard, for example, the plant optimization system 140 may be configured to generate a virtual recycling process model corresponding to a recycling process associated with the plant 102 based at least in part on the physical representation that includes an (n) number of physical components and/or the virtual recycling process model generated by the plant optimization system 140 when the plurality of physical components includes a first physical component 302 and a second physical component 304. Said differently, the plant optimization system 140 may be configured to expand the virtual recycling process model illustrated in visualization 400 when the recycling process includes more than the first physical component 302 and/or the second physical component 304. In this regard, for example, FIG. 5 illustrates a visualization 500 of the virtual recycling process model that includes a (n) number of physical components.

In some embodiments, based at least in part on the virtual recycling process model for an (n) number of physical components, the plant optimization system 140 may be configured to generate a sensitivity function associated with a recycling process having (n) number of physical components, which is illustrated below as equation (4): $\left[\begin{matrix}{u}_{t 1} \left(s\right) \\ {u}_{t 2} \left(s\right) \\ \begin{matrix}⋮ \\ ⋮\end{matrix} \\ {u}_{t , n} \left(s\right)\end{matrix}\right] = \frac{1}{1 - {\prod }_{i = 1}^{n} {G}_{i} \left(s\right)} \left[\begin{matrix}{u}_{1} \left(s\right) + {u}_{2} \left(s\right) {\prod }_{i = 2}^{n} {G}_{i} \left(s\right) + {u}_{3} \left(s\right) {\prod }_{i = 3}^{n} {G}_{i} \left(s\right) + … + {u}_{n} \left(s\right) {G}_{n} \left(s\right) \\ {u}_{2} \left(s\right) + {u}_{3} \left(s\right) {\prod }_{i ∉ \left\{2\right\}}^{n} {G}_{i} \left(s\right) + {u}_{4} \left(s\right) {\prod }_{i ∉ \left\{2, 3\right\}}^{n} {G}_{i} \left(s\right) + … + {u}_{1} \left(s\right) {G}_{1} \left(s\right) \\ ⋮ \\ {u}_{n} \left(s\right) + {u}_{1} \left(s\right) {\prod }_{i = 1}^{n - 1} {G}_{i} \left(s\right) + {u}_{2} \left(s\right) {\prod }_{i = 2}^{n - 1} {G}_{i} \left(s\right) + … + {u}_{n - 1} \left(s\right) {G}_{n - 1} \left(s\right)\end{matrix}\right] ,$ (4)

In some embodiments, based at least in part on the virtual recycling process model for an (n) number of physical components, the plant optimization system 140 may be configured to generate a complimentary sensitivity function associated with a recycling process having (n) number of physical components, which is illustrated below as equation (5): ${y}_{i} \left(s\right) = {G}_{i} \left(s\right) {u}_{t , i} \left(s\right) , ∀ i = \left\{1,..,n\right\} ,$ (5)

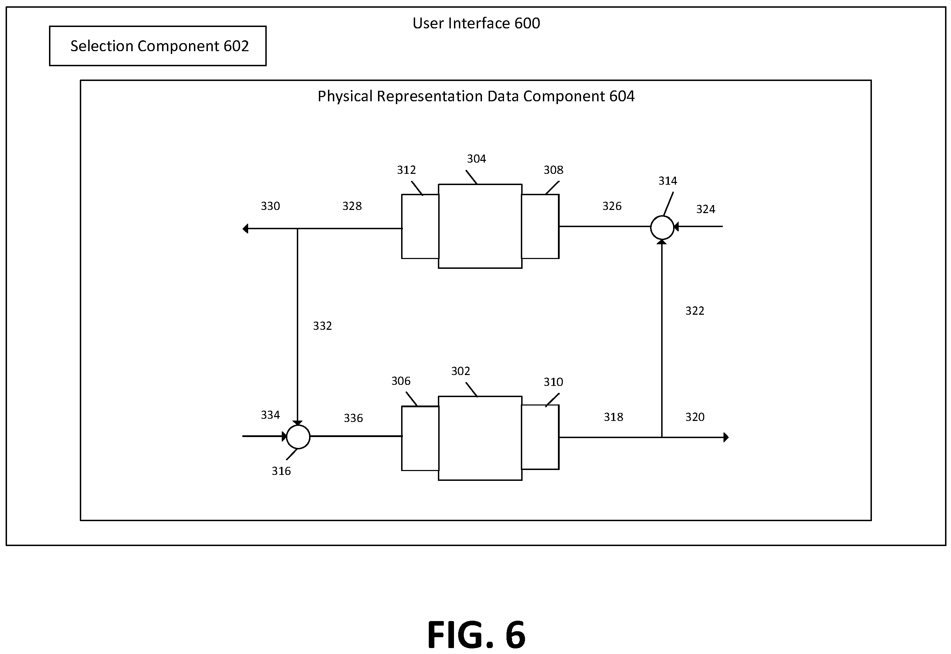

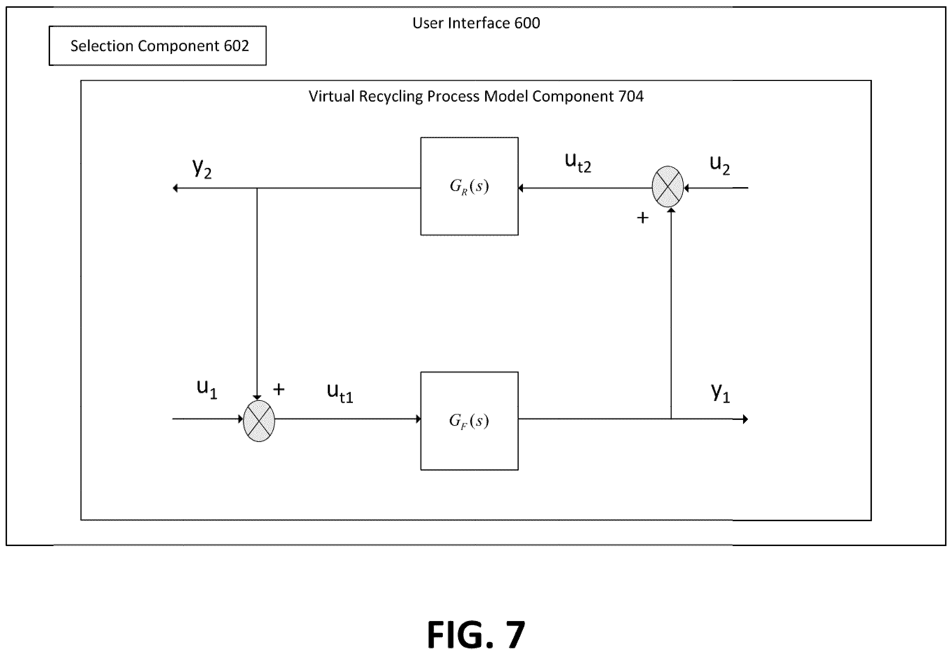

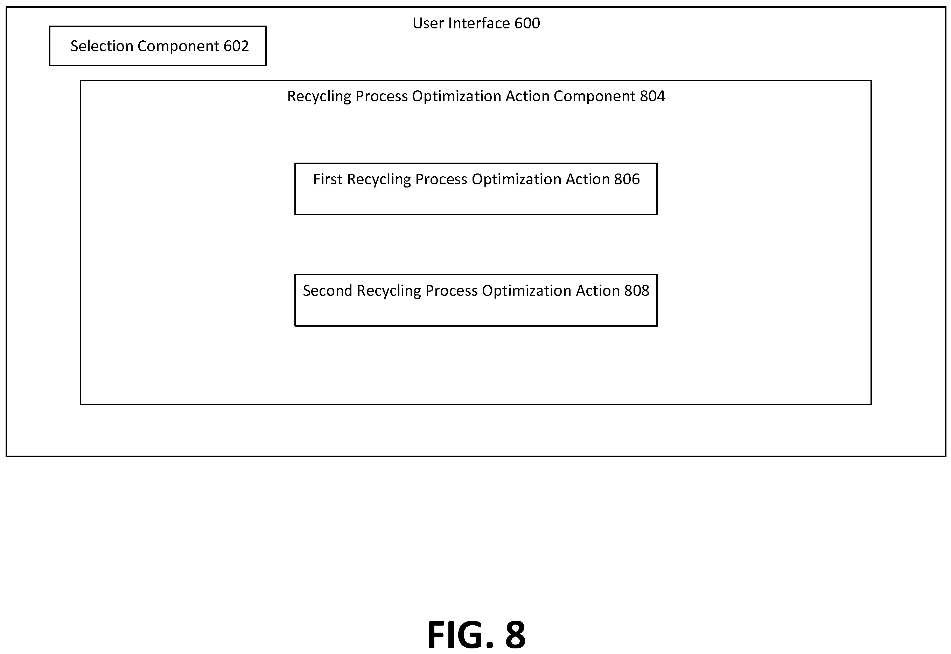

In some embodiments, the plant optimization system 140 may be configured to generate a user interface 600. In some embodiments, the user interface 600 may be configured to display physical representation data associated with the plant 102. In this regard, for example, FIG. 6 illustrates the user interface 600 having a physical representation data component 604. In some embodiments, the user interface 600 may be configured to display a virtual recycling process model (e.g., a virtual recycling process model having two components, (n) components, etc.). In this regard, for example, FIG. 7 illustrates the user interface 600 having a virtual recycling process model component 704. In some embodiments, the user interface 600 may be configured to display at least one recycling process optimization action. In this regard, for example, FIG. 8 illustrates the user interface 600 having a recycling process optimization action component 804. For example, the recycling process optimization action component 804 may be configured to display a first recycling process optimization action 806 and a second recycling process optimization action 808. In some embodiments, the user interface 600 may include a selection component 602. The selection component 602 may be configured to enable a user associated with the user interface 600 to toggle between various components of the user interface 600. That is, for example, the selection component 602 may be configured to enable a user to toggle between the physical representation data component 604, the virtual recycling process model component 704, and/or the recycling process optimization action component 804.

### Example Methods

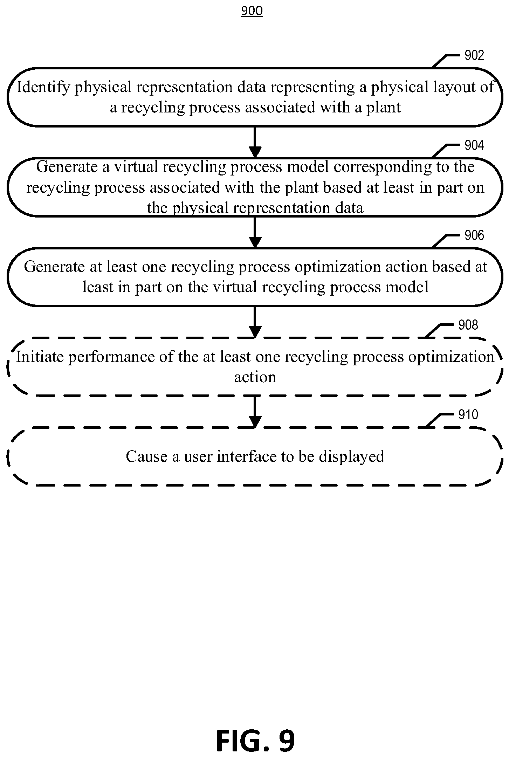

Referring now to FIG. 9, a flowchart providing an example method 900 is illustrated. In this regard, FIG. 9 illustrates operations that may be performed by the plant optimization system 140, the user device 160, the plant 102, and/or the like. In some embodiments, the example method 900 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 900.

As shown in block 902, the method 900 may include identifying physical representation data representing a physical layout of a recycling process associated with a plant. In some embodiments, the physical representation data may represent a physical layout of a multiple-input multiple-output recycling processed associated with the plant.

As described above, in some embodiments, the physical representation data includes a physical representation of a plurality of physical components of the plant, such as physical components of the plant that are associated with a recycling process performed by the plant and/or the plurality of physical components of the plant. For example, the physical representation data may include a first physical component of the plurality of physical components and a second physical component of the plurality of physical components. That is, the first physical component and the second physical component may be components of the plurality of physical components of the plant configured to at least in part perform a recycling process associated with the plant. For example, the first physical component may be configured to recycle at least some of the byproducts created by the second physical component and the second physical component may be configured to recycle at least some of the byproducts created by the first physical component (e.g., a multiple-input multiple-output recycling process). In some embodiments, for example, the first physical component may be a hydrocracking component (e.g., a hydrocracker) and the second physical component may be a fluid catalytic cracking component (e.g., a fluid catalytic cracker).

In some embodiments, each of the plurality of physical components may be configured to perform a particular operation for transforming, storing, releasing, and/or otherwise handling one or more input ingredients to create one or more processed products. In some embodiments, when performing a particular operation for transforming, storing, releasing, and/or otherwise handling one or more input ingredients to create one or more processed products each of the plurality of physical components may be configured to create one or more byproducts (e.g., byproducts being products created by a component from one or more input ingredients that are not the one or more processed products). Said differently, each of the plurality of physical components may be configured to receive an input feed having one or more input ingredients and output an output feed having one or more processed products and/or one or more byproducts.

In this regard, for example, the first physical component of the plurality of physical components may be configured to receive a first input feed having input ingredients associated with the first physical component. For example, if the first physical component is a hydrocracking component, the first input feed may include one or more hydrocarbons (e.g., unrefined oil, minimally refined oil, etc.). Similarly, for example, the second physical component of the plurality of physical components may be configured to receive a second input feed having input ingredients associated with the second physical component. For example, if the second physical component is a fluid catalytic cracking component, the second input feed may include one or more hydrocarbons (e.g., unrefined oil, minimally refined oil, etc.).

In some embodiments, for example, the first physical component of the plurality of physical components may be configured to output a first output feed having one or more processed products. For example, if the first physical component is a hydrocracking component, the first output feed may include distillate (e.g., distillate being a processed product). Additionally or alternatively, the first physical component of the plurality of physical components may be configured to output a first output feed having one or more byproducts. For example, if the first physical component is a hydrocracking component, the first output feed may include one or more of naphtha, heavy distillate, and/or hydrocracker bottoms (e.g., naphtha, heavy distillate, and/or hydrocracker bottoms being byproducts).

In some embodiments, for example, the second physical component of the plurality of physical components may be configured to output a second output feed having one or more processed products. For example, if the second physical component is a fluid catalytic cracking component, the second output feed may include gasoline (e.g., gasoline being a processed product). Additionally or alternatively, the second physical component of the plurality of physical components may be configured to output a second output feed having one or more byproducts. For example, if the second physical component is a fluid catalytic cracking component, the second output feed may include one or more of propane, butane, light cycle oil, heavy gas oil, and/or slurry (e.g., propane, butane, light cycle oil, heavy gas oil, and/or slurry being byproducts).

In some embodiments, each of the plurality of physical components may be include a feed input and/or a feed output. For example, the first physical component may include a first feed input and a first feed output. As another example, the second physical component may include a second feed input and a second feed output. In this regard, for example, the first feed input may be configured to receive the first input feed into the first physical component (e.g., unrefined oil, minimally refined oil, etc.) and the first feed output may be configured to output the first output feed from the first physical component (e.g., distillate, naphtha, heavy distillate, and/or hydrocracker bottoms). Similarly, for example, the second feed input may be configured to receive the second input feed into the second physical component (e.g., unrefined oil, minimally refined oil, etc.) and the second feed output may be configured to output the second output feed from the second physical component (e.g., gasoline, propane, butane, light cycle oil, heavy gas oil, and/or slurry).

In some embodiments, the physical representation data includes a physical representation of a plurality of feed paths associated with the plurality of physical components of the plant, such as a plurality of feed paths associated with physical components of the plant that are associated with a recycling process performed by the plant and/or the plurality of physical components of the plant.

In some embodiments, the plurality of feed paths may include a first output feed path. In some embodiments, the first output feed path may be in communication with the first feed output. In this regard, for example, the first output feed path may be configured to receive the first output feed from the first feed output. For example, when the first physical component is a hydrocracking component, the first output feed path may be configured to receive the first feed output having one or more processed products and/or one or more byproducts associated with the first physical component (e.g., distillate, naphtha, heavy distillate, and/or hydrocracker bottoms).

In some embodiments, the plurality of feed paths may include a second output feed path. In some embodiments, the second output feed path may be in communication with the second feed output. In this regard, for example, the second output feed path may be configured to receive the second output feed from the second feed output. For example, when the first physical component is a fluid catalytic cracking component, the second output feed path may be configured to receive the second feed output having one or more processed products and/or one or more byproducts associated with the second physical component (e.g., gasoline, propane, butane, light cycle oil, heavy gas oil, and/or slurry).

In some embodiments, the plurality of feed paths may include a first processed feed path. In some embodiments, the first processed feed path may be in communication with the first output feed path. In this regard, for example, the first processed feed path may be configured to receive at least a portion of the first output feed from the first output feed path. Said differently, the first processed feed path may be configured to receive the one or more processed products associated with the first physical component in the first output feed from the first output feed path, such as distillate (e.g., the first processed feed path may receive the processed products and may not receive at least some of the byproducts).

In some embodiments, the first processed feed path may be configured to at least in part route at least a portion of the first output feed (e.g., at least the portion of the first output feed having the processed products) to another of the plurality of physical components of the plant (e.g., a third component of the plurality of physical components of the plant). For example, the first processed feed path may be configured to route the portion of the first output feed to a storage component (e.g., the portion may be placed in storage until it can be consumed, sold, etc.). As another example, the first processed feed path may be configured to route the portion of the first output feed to a pump component such that the portion of the first output feed may be transferred to a different part of the plant.

In some embodiments, the plurality of feed paths may include a second processed feed path. In some embodiments, the second processed feed path may be in communication with the second output feed path. In this regard, for example, the second processed feed path may be configured to receive at least a portion of the second output feed from the second output feed path. Said differently, the second processed feed path may be configured to receive the one or more processed products associated with the second physical component in the second output feed from the second output feed path, such as gasoline (e.g., the second processed feed path may receive the processed products and may not receive at least some of the byproducts).

In some embodiments, the second processed feed path may be configured to at least in part route at least a portion of the second output feed (e.g., the portion of the second output feed having the processed products) to another of the plurality of physical components of the plant (e.g., a fourth component of the plurality of physical components of the plant). For example, the second processed feed path may be configured to route the portion of the second output feed to a storage component (e.g., the portion may be placed in storage until it can be consumed, sold, etc.). As another example, the second processed feed path may be configured to route the portion of the second output feed to a pump component such that the portion of the second output feed may be transferred to a different part of the plant.

In some embodiments, the plurality of feed paths may include a first recycle feed path. In some embodiments, the first recycle feed path may be in communication with the first output feed path. In this regard, for example, the first recycle feed path may be configured to receive at least a portion of the first output feed from the first output feed path. Said differently, the first recycle feed path may be configured to receive at least one of the one or more byproducts associated with the first physical component in the first output feed from the first output feed path. For example, when the first physical component is a hydrocracking component, the first recycle feed path may receive at least one of naphtha, heavy distillate, and/or hydrocracker bottoms. (e.g., the first recycle feed path does not receive the processed products).

In some embodiments, the first recycle feed path may be configured to at least in part route at least a portion of the second output feed (e.g., a portion of the second output feed having at least one of the byproducts) to a first combiner. In some embodiments, the first combiner may be configured to combine the portion of the second output feed received from the first recycle feed path with a second fresh feed received by the first combiner from a second fresh feed path. In some embodiments, the second fresh feed may be one or more input ingredients (e.g., unprocessed hydrocarbons). In this regard, for example, the first combiner may be configured to combine at least one of the byproducts created by the first physical component with one or more input ingredients associated with the second physical component to create the second input feed (e.g., the second input feed being an input for the second physical component). In some embodiments, the first combiner may be in communication with a second input feed path configured to provide the second input feed to the second physical component.

In some embodiments, the plurality of feed paths may include a second recycle feed path. In some embodiments, the second recycle feed path may be in communication with the second output feed path. In this regard, for example, the second recycle feed path may be configured to receive at least a portion of the second output feed from the second output feed path. Said differently, the second recycle feed path may be configured to receive at least one of the one or more byproducts associated with the second physical component in the second output feed from the second output feed path. For example, when the first physical component is a fluid catalytic cracking component, the second recycle feed path may receive at least one of naphtha, heavy distillate, and/or hydrocracker bottoms. (e.g., the second recycle feed path does not receive the processed products).

In some embodiments, the second recycle feed path may be configured to at least in part route at least a portion of the second output feed (e.g., a portion of the second output feed having at least one of the byproducts) to a second combiner. In some embodiments, the second combiner may be configured to combine the portion of the second output feed received from the second recycle feed path with a first fresh feed received by the second combiner from a first fresh feed path. In some embodiments, the first fresh feed may be one or more input ingredients (e.g., unprocessed hydrocarbons). In this regard, for example, the second combiner may be configured to combine at least one of the byproducts created by the second physical component with one or more input ingredients associated with the first physical component to create the first input feed (e.g., the first input feed being an input for the first physical component). In some embodiments, the second combiner may be in communication with a first input feed path configured to provide the first input feed to the first physical component.

In some embodiments, the plurality of physical components (e.g., the first physical component and the second physical component) may be configured to recycle at least some of the byproducts created by the plurality of physical components. In this regard, for example, the plurality of physical components may be configured to perform a multiple-input multiple-output recycling process in which byproducts created by one of the plurality of physical components are recycled by another of the plurality of physical components. For example, at least some of the byproducts created by the first physical component may be recycled by the second physical component (e.g., at least one of the byproducts created by the first physical component are processed by the second physical component) and at least some of the byproducts created by the second physical component may be recycled by the first physical component (e.g., at least one of the byproducts created by the second physical component are processed by the second physical component). In some embodiments, a multiple-input multiple-output recycling process may be more efficient than a recycling process in which byproducts are recycled by the same component that created the byproduct. For example, when the first physical component is a fluid catalytic cracking component, the first physical component may create heavy gas oil as a byproduct. The first physical component may be configured to recycle heavy gas oil, however, when the second physical component is a hydrocracking component, the second physical component may be more efficient at recycling heavy gas oil than the first physical component. In this regard, by enabling the second physical component to recycle a byproduct (e.g., heavy gas oil) created by the first physical component, the plant may be able to perform a recycling process in a more efficient and cost effective manner.

As shown in block 904, the method 900 may include generating a virtual recycling process model corresponding to the recycling process associated with the plant based at least in part on the physical representation data. As described above, in some embodiments, for example, the virtual recycling process model includes a gain G_{F}(s) associated with a forward path processing. In this regard, for example, the gain G_{F}(s) may be a virtual representation of at least one of the plurality of physical components performing a particular operation for transforming, storing, releasing, and/or otherwise handling one or more input ingredients to create one or more processed products and/or byproducts. In some embodiments, the gain G_{F}(s) may be derived at least in part from the physical representation data. In some embodiments, the virtual recycling process model includes a gain G_{R}(s) associated with a recycling path processing. In this regard, for example, the gain G_{R}(s) may be a virtual representation of at least one of the plurality of physical components one of the plurality of physical components performing a particular operation for transforming, storing, releasing, and/or otherwise handling one or more byproducts to create one or more processed products and/or other byproducts. In some embodiments, the gain G_{R}(s) may be derived at least in part from the physical representation data.

In some embodiments, the virtual recycling process model may include virtual representations of one or more of the plurality of feed paths. For example, the virtual recycling process model may include a virtual representation u₁ of the first fresh feed path. As another example, the virtual recycling process model may include a virtual representation uₜ₁ of the first input feed path (e.g., the combination of the first fresh feed path and second recycle feed path as combined by the second combiner). As another example, the virtual recycling process model may include a virtual representation u₂ of the second fresh feed path. As another example, the virtual recycling process model may include a virtual representation uₜ₂ of the second input feed path (e.g., the combination of the second fresh feed path and first recycle feed path as combined by the first combiner). As another example, the virtual recycling process model may include a virtual representation y₁ of the first processed feed path. As another example, the virtual recycling process model may include a virtual representation y₂ of the second processed feed path.

In some embodiments, based at least in part on the virtual recycling process model (e.g., based on G_{F}(s), G_{R}(s), u₁, uₜ₁, u₂, uₜ₂,), a sensitivity function associated with the recycling process may be generated, which is illustrated below as equation (1): $\left[\begin{matrix}{u}_{t 1} \left(s\right) \\ {u}_{t 2} \left(s\right)\end{matrix}\right] = \frac{1}{1 - {G}_{F} \left(s\right) {G}_{R} \left(s\right)} \left[\begin{matrix}{u}_{1} \left(s\right) + {G}_{R} \left(s\right) {u}_{2} \left(s\right) \\ {u}_{2} \left(s\right) + {G}_{F} \left(s\right) {u}_{1} \left(s\right)\end{matrix}\right] ,$ (1)

In some embodiments, based at least in part on the virtual recycling process model and/or the sensitivity function associated with the recycling process, a complimentary sensitivity function associated with the first processed feed path may be generated, which is illustrated below as equation (2): ${y}_{1} \left(s\right) = {G}_{F} \left(s\right) {u}_{t 1} \left(s\right) ,$ (2)

In some embodiments, based at least in part on the virtual recycling process model and/or the sensitivity function associated with the recycling process, a complimentary sensitivity function associated with the second processed feed path may be generated, which is illustrated below as equation (3): ${y}_{2} \left(s\right) = {G}_{R} \left(s\right) {u}_{t 2} \left(s\right) ,$ (3)

In some embodiments, the physical representation data may include a representation of a plurality of physical components of the plant that includes more than two physical components (e.g., more than the first physical component and the second physical component). In this regard, for example, a virtual recycling process model may be generated corresponding to a recycling process associated with the plant based at least in part on the physical representation that includes an (n) number of physical components and/or the virtual recycling process model generated when the plurality of physical components includes a first physical component and a second physical component.

In some embodiments, based at least in part on the virtual recycling process model for an (n) number of physical components, a sensitivity function associated with a recycling process having (n) number of physical components may be generated, which is illustrated below as equation (4): $\left[\begin{matrix}{u}_{t 1} \left(s\right) \\ {u}_{t 2} \left(s\right) \\ \begin{matrix}⋮ \\ ⋮\end{matrix} \\ {u}_{t , n} \left(s\right)\end{matrix}\right] = \frac{1}{1 - {\prod }_{i = 1}^{n} {G}_{i} \left(s\right)} \left[\begin{matrix}{u}_{1} \left(s\right) + {u}_{2} \left(s\right) {\prod }_{i = 2}^{n} {G}_{i} \left(s\right) + {u}_{3} \left(s\right) {\prod }_{i = 3}^{n} {G}_{i} \left(s\right) + … + {u}_{n} \left(s\right) {G}_{n} \left(s\right) \\ {u}_{2} \left(s\right) + {u}_{3} \left(s\right) {\prod }_{i ∉ \left\{2\right\}}^{n} {G}_{i} \left(s\right) + {u}_{4} \left(s\right) {\prod }_{i ∉ \left\{2, 3\right\}}^{n} {G}_{i} \left(s\right) + … + {u}_{1} \left(s\right) {G}_{1} \left(s\right) \\ ⋮ \\ {u}_{n} \left(s\right) + {u}_{1} \left(s\right) {\prod }_{i = 1}^{n - 1} {G}_{i} \left(s\right) + {u}_{2} \left(s\right) {\prod }_{i = 2}^{n - 1} {G}_{i} \left(s\right) + … + {u}_{n - 1} \left(s\right) {G}_{n - 1} \left(s\right)\end{matrix}\right] ,$ (4)

In some embodiments, based at least in part on the virtual recycling process model for an (n) number of physical components, a complimentary sensitivity function associated with a recycling process having (n) number of physical components may be generated, which is illustrated below as equation (5): ${y}_{i} \left(s\right) = {G}_{i} \left(s\right) {u}_{t , i} \left(s\right) , ∀ i = \left\{1,..,n\right\} ,$ (5)

As shown in block 906, the method 900 may include generating at least one recycling process optimization action based at least in part on the virtual recycling process model. As described above, in some embodiments, for example, the at least one recycling process optimization action may include generating an optimized amount of a particular processed product (e.g., gasoline) in a particular time interval (e.g., maximize and/or minimize a particular processed product in a particular time interval). For example, the at least one recycling process optimization action may include generating an optimized amount of a particular processed product in a particular time interval to maximize profit for the plant. As another example, the at least one recycling process optimization action may include generating an optimized amount of a particular processed product in a particular time interval to minimize waste created by the plant. As another example, the at least one recycling process optimization action may include generating an optimized amount of a particular processed product in a particular time interval to minimize costs for the plant.

In some embodiments, for example, the at least one recycling process optimization action may be used to configure one or more of the plurality of physical components (e.g., the hydrocracking component) of the plant in order to optimize profit, cost, or waste generated by the one or more of the plurality of physical components of the plant and/or the profit, cost, or waste generated by the plant overall. For example, the at least one recycling process optimization action may be used to configure one or more of the plurality of physical components of the plant such that the one or more of the physical components generate a target processed product amount that optimizes the profit, cost, and/or waste generated by the one or more of the plurality of physical components of the plant and/or the profit, cost, and/or waste generated by the plant overall (e.g., a target amount of processed product for the first physical component to generate).

As shown in block 908, the method 900 may optionally include initiating performance of the at least one recycling process optimization action. As described above, in some embodiments, for example, initiating performance of the at least one recycling process optimization action may include causing operation of at least one of the plurality of physical components of the plant based at least in part on the at least one recycling process optimization action. In this regard, for example, at least one of the plurality of physical components may be caused to generate a particular amount of a particular processed product in a particular time interval based at least in part on the at least one recycling process optimization action. For example, the first physical component (e.g., a hydrocracking component) may be caused to create a particular amount of a processed product (e.g., distillate) based on input ingredients from the first fresh feed path and the second recycle feed path during a twenty four hour time interval.

As shown in block 910, the method 900 may optionally include causing a user interface to be displayed. As described above, in some embodiments, the user interface may be configured to display physical representation data associated with the plant. In this regard, for example, the user interface may have a physical representation data component. In some embodiments, the user interface may be configured to display a virtual recycling process model (e.g., a virtual recycling process model having two components, (n) components, etc.). In this regard, for example, the user interface may have a virtual recycling process model component. In some embodiments, the user interface may be configured to display at least one recycling process optimization action. In this regard, for example, the user interface may have a recycling process optimization action component. For example, the recycling process optimization action component may be configured to display a first recycling process optimization action and a second recycling process optimization action. In some embodiments, the user interface may include a selection component. The selection component may be configured to enable a user associated with the user interface to toggle between various components of the user interface. That is, for example, the selection component may be configured to enable a user to toggle between the physical representation data component, the virtual recycling process model component, and/or the recycling process optimization action component.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

## Claims

1. A computer-implemented method comprising:
identifying (902) physical representation data representing a physical layout of a recycling process associated with a plant (102), wherein the physical representation data comprises a physical representation of a plurality of physical components of the plant (102) associated with the recycling process, spatial location of the physical components of the plant (102), and a physical representation of a plurality of feed paths associated with the plurality of physical components of the plant (102) associated with the recycling process, wherein a first physical component (302) of the plurality of physical components of the plant (102) includes a first feed input (306), and a first feed output (310), and a second physical component (304) of the plurality of physical components of the plant (102) includes a second feed input (308), and a second feed output (312), wherein the first feed output (310) is configured to output a first output feed and the second feed output (312) is configured to output a second output feed, wherein at least a portion of the first output feed is routed to the second feed input (308) at least in part by a first recycle feed path (322) of the plurality of feed paths and at least a portion of the second output feed is routed to the first feed input (306) at least in part by a second recycle feed path (322) of the plurality of feed paths, wherein the first recycle feed path (322) is configured to at least in part route at least a portion of the second output feed to a first combiner (314);
generating (904) a virtual recycling process model corresponding to the recycling process associated with the plant (102) based at least in part on the physical representation data; and
generating (906) at least one recycling process optimization action based at least in part on the virtual recycling process model.

2. The computer-implemented method of claim 1, further comprising:
initiating (908) performance of the at least one recycling process optimization action.

3. The computer-implemented method of claim 2, wherein initiating performance of the at least one recycling process optimization action comprises:
causing operation of at least one of the plurality of physical components of the plant (102) based at least in part on the at least one recycling process optimization action.

4. The computer-implemented method of claim 1, further comprising:
causing (910) a user interface (600) to be displayed, wherein the user interface (600) comprises at least one of the virtual recycling process model or the at least one recycling process optimization action.

5. The computer-implemented method of claim 1, wherein at least a portion of the first output feed is routed to a third physical component of the plurality of physical components and at least a portion of the second output feed is routed to a fourth physical component of the plurality of physical components.

6. The computer-implemented method of claim 1, wherein the first feed comprises at least one of naphtha, distillate, heavy distillate, or hydrocracker bottoms.

7. The computer-implemented method of claim 1, wherein the second feed comprises at least one of propane, butane, gasoline, light cycle oil, heavy gas oil, or slurry.

8. The computer-implemented method of claim 1, wherein the plurality of physical components of the plant (102) comprises at least one of a fluid catalytic cracking component or a hydrocracking component.

9. The computer-implemented method of claim 1, wherein the recycling process is a multiple-input multiple-output recycling process.

10. The computer-implemented method of claim 1, wherein the first combiner (314) is configured to combine a plurality of byproducts generated by the first physical component (302) with one or more input ingredients associated with the second physical component (304) to create the second input feed.

11. An apparatus (200) comprising at least one processor (202) and at least one non-transitory memory (204) including computer-coded instructions thereon, the computer coded instructions, with the at least one processor (202), cause the apparatus (200) to:
identify physical representation data representing a physical layout of a recycling process associated with a plant (102), wherein the physical representation data comprises a physical representation of a plurality of physical components of the plant (102) associated with the recycling process, spatial location of the physical components of the plant (102), and a physical representation of a plurality of feed paths associated with the plurality of physical components of the plant (102) associated with the recycling process, wherein a first physical component (302) of the plurality of physical components of the plant (102) includes a first feed input (306), and a first feed output (310), and a second physical component (304) of the plurality of physical components of the plant (102) includes a second feed input (308), and a second feed output (312), wherein the first feed output (310) is configured to output a first output feed and the second feed output (312) is configured to output a second output feed, wherein at least a portion of the first output feed is routed to the second feed input (308) at least in part by a first recycle feed path (322) of the plurality of feed paths and at least a portion of the second output feed is routed to the first feed input (306) at least in part by a second recycle feed path (322) of the plurality of feed paths, wherein the first recycle feed path (322) is configured to at least in part route at least a portion of the second output feed to a first combiner (314);
generate a virtual recycling process model corresponding to the recycling process associated with the plant (102) based at least in part on the physical representation data; and
generate at least one recycling process optimization action based at least in part on the virtual recycling process model.

12. The apparatus (200) of claim 11, wherein the computer coded instructions, further with the at least one processor (202), cause the apparatus (200) to:
initiate performance of the at least one recycling process optimization action, wherein initiating performance of the at least one recycling process optimization action comprises causing operation of at least one of the plurality of physical components of the plant (102) based at least in part on the at least one recycling process optimization action.

13. A computer program product comprising at least one non-transitory computer-readable storage medium having computer program code stored thereon that, in execution with at least one processor (202), configures the computer program product for:
identifying physical representation data representing a physical layout of a recycling process associated with a plant (102), wherein the physical representation data comprises a physical representation of a plurality of physical components of the plant (102) associated with the recycling process, spatial location of the physical components of the plant (102), and a physical representation of a plurality of feed paths associated with the plurality of physical components of the plant (102) associated with the recycling process, wherein a first physical component (302) of the plurality of physical components of the plant (102) includes a first feed input (306), and a first feed output (310), and a second physical component (304) of the plurality of physical components of the plant (102) includes a second feed input (308), and a second feed output (312), wherein the first feed output (310) is configured to output a first output feed and the second feed output (312) is configured to output a second output feed, wherein at least a portion of the first output feed is routed to the second feed input (308) at least in part by a first recycle feed path (322) of the plurality of feed paths and at least a portion of the second output feed is routed to the first feed input (306) at least in part by a second recycle feed path (322) of the plurality of feed paths, wherein the first recycle feed path (322) is configured to at least in part route at least a portion of the second output feed to a first combiner (314);
generating a virtual recycling process model corresponding to the recycling process associated with the plant (102) based at least in part on the physical representation data; and
generating at least one recycling process optimization action based at least in part on the virtual recycling process model.

## Patentansprüche

1. Computerimplementiertes Verfahren, umfassend:
Identifizieren (902) von physischen Darstellungsdaten, die ein physisches Layout eines Recyclingprozesses darstellen, der einer Anlage (102) zugehörig ist, wobei die physischen Darstellungsdaten eine physische Darstellung einer Vielzahl von physischen Komponenten der dem Recyclingprozess zugehörigen Anlage (102), eine räumliche Position der physischen Komponenten der Anlage (102) und eine physische Darstellung einer Vielzahl von Zufuhrwegen, die der Vielzahl von physischen Komponenten der dem Recyclingprozess zugehörigen Anlage (102) zugehörig sind, umfassen, wobei eine erste physische Komponente (302) der Vielzahl von Komponenten der Anlage (102) eine erste Zufuhreingabe (306) und eine erste Zufuhrausgabe (310) beinhaltet, und eine zweite physische Komponente (304) der Vielzahl von physischen Komponenten der Anlage (102) eine zweite Zufuhreingabe (308) und eine zweite Zufuhrausgabe (312) beinhaltet, wobei die erste Zufuhrausgabe (310) dazu konfiguriert ist, eine erste Ausgabezufuhr auszugeben und die zweite Zufuhrausgabe (312) dazu konfiguriert ist, eine zweite Ausgabezufuhr auszugeben, wobei mindestens ein Teil der ersten Ausgabezufuhr mindestens teilweise durch einen ersten Recyclezufuhrweg (322) der Vielzahl von Zufuhrwegen zu der zweiten Zufuhreingabe (308) geleitet wird und mindestens ein Teil der zweiten Ausgabezufuhr mindestens teilweise durch einen zweiten Recyclezufuhrweg (322) der Vielzahl von Zufuhrwegen zu der ersten Zufuhreingabe (306) geleitet wird, wobei der erste Recyclezufuhrweg (322) dazu konfiguriert ist, mindestens teilweise mindestens einen Teil der zweiten Ausgabezufuhr zu einer ersten Kombiniervorrichtung (314) zu leiten;
Erzeugen (904) eines virtuellen Recyclingprozessmodells, das dem der Anlage (102) zugehörigen Recyclingprozess entspricht, mindestens teilweise auf Basis der physischen Darstellungsdaten; und
Erzeugen (906) mindestens einer Recyclingprozess-Optimierungsmaßnahme mindestens teilweise auf Basis des virtuellen Recyclingprozessmodells.

2. Computerimplementiertes Verfahren nach Anspruch 1, ferner umfassend:
Initiieren (908) der Durchführung der mindestens einen Recyclingprozess-Optimierungsmaßnahme.

3. Computerimplementiertes Verfahren nach Anspruch 2, wobei das Initiieren der Durchführung der mindestens einen Recyclingprozess-Optimierungsmaßnahme Folgendes umfasst:
Veranlassen eines Betriebs von mindestens einer der Vielzahl von physischen Komponenten der Anlage (102) mindestens teilweise auf Basis der mindestens einen Recyclingprozess-Optimierungsmaßnahme.

4. Computerimplementiertes Verfahren nach Anspruch 1, ferner umfassend:
Veranlassen (910), dass eine Benutzerschnittstelle (600) angezeigt wird, wobei die Benutzerschnittstelle (600) mindestens eines von dem virtuellen Recyclingprozessmodell oder der mindestens einen Recyclingprozess-Optimierungsmaßnahme umfasst.

5. Computerimplementiertes Verfahren nach Anspruch 1, wobei mindestens ein Teil der ersten Ausgabezufuhr zu einer dritten physischen Komponente der Vielzahl von physischen Komponenten geleitet wird und mindestens ein Teil der zweiten Ausgabezufuhr zu einer vierten physischen Komponente der Vielzahl von physischen Komponenten geleitet wird.

6. Computerimplementiertes Verfahren nach Anspruch 1, wobei die erste Zufuhr mindestens eines von Naphtha, Destillat, Schwerdestillat oder Hydrocracker-Rückständen umfasst.

7. Computerimplementiertes Verfahren nach Anspruch 1, wobei die zweite Zufuhr mindestens eines von Propan, Butan, Benzin, leichtem Kreislauföl, schwerem Gasöl oder Schlamm umfasst.

8. Computerimplementiertes Verfahren nach Anspruch 1, wobei die Vielzahl von physischen Komponenten der Anlage (102) mindestens eines von einer Katalytisches-Fluid-Cracken-Komponente oder einer Hydrocracken-Komponente umfasst.

9. Computerimplementiertes Verfahren nach Anspruch 1, wobei der Recyclingprozess ein Mehrfacheingabe-Mehrfachausgabe-Recyclingprozess ist.

10. Computerimplementiertes Verfahren nach Anspruch 1, wobei die erste Kombiniervorrichtung (314) dazu konfiguriert ist, eine Vielzahl von durch die erste physische Komponente (302) erzeugten Nebenprodukten mit einem oder mehreren der zweiten physischen Komponente (304) zugehörigen Eingabebestandteilen zu kombinieren, um die zweite Eingabezufuhr hervorzubringen.

11. Einrichtung (200), umfassend mindestens einen Prozessor (202) und mindestens einen nichtflüchtigen Speicher (204), der computercodierte Anweisungen darauf beinhaltet, wobei die computercodierten Anweisungen mit dem mindestens einen Prozessor (202), die Einrichtung (200) veranlassen:
physische Darstellungsdaten zu identifizieren, die ein physisches Layout eines Recyclingprozesses darstellen, der einer Anlage (102) zugehörig ist, wobei die physischen Darstellungsdaten eine physische Darstellung einer Vielzahl von physischen Komponenten der dem Recyclingprozess zugehörigen Anlage (102), eine räumliche Position der physischen Komponenten der Anlage (102) und eine physische Darstellung einer Vielzahl von Zufuhrwegen, die der Vielzahl von physischen Komponenten der Anlage (102) zugehörig sind, umfassen, wobei eine erste physische Komponente (302) der Vielzahl von Komponenten der dem Recyclingprozess zugehörigen Anlage (102) eine erste Zufuhreingabe (306) und eine erste Zufuhrausgabe (310) beinhaltet, und eine zweite physische Komponente (304) der Vielzahl von physischen Komponenten der Anlage (102) eine zweite Zufuhreingabe (308) und eine zweite Zufuhrausgabe (312) beinhaltet, wobei die erste Zufuhrausgabe (310) dazu konfiguriert ist, eine erste Ausgabezufuhr auszugeben und die zweite Zufuhrausgabe (312) dazu konfiguriert ist, eine zweite Ausgabezufuhr auszugeben, wobei mindestens ein Teil der ersten Ausgabezufuhr mindestens teilweise durch einen ersten Recyclezufuhrweg (322) der Vielzahl von Zufuhrwegen zu der zweiten Zufuhreingabe (308) geleitet wird und mindestens ein Teil der zweiten Ausgabezufuhr mindestens teilweise durch einen zweiten Recyclezufuhrweg (322) der Vielzahl von Zufuhrwegen zu der ersten Zufuhreingabe (306) geleitet wird, wobei der erste Recyclezufuhrweg (322) dazu konfiguriert ist, mindestens teilweise mindestens einen Teil der zweiten Ausgabezufuhr zu einer ersten Kombiniervorrichtung (314) zu leiten;
ein virtuelles Recyclingprozessmodell zu erzeugen, das dem der Anlage (102) zugehörigen Recyclingprozess entspricht, mindestens teilweise auf Basis der physischen Darstellungsdaten; und
mindestens eine Recyclingprozess-Optimierungsmaßnahme mindestens teilweise auf Basis des virtuellen Recyclingprozessmodells zu erzeugen.

12. Einrichtung (200) nach Anspruch 11, wobei die computercodierten Anweisungen ferner mit dem mindestens einen Prozessor (202) die Einrichtung (200) veranlassen:
eine Durchführung der mindestens einen Recyclingprozess-Optimierungsmaßnahme zu initiieren, wobei das Initiieren der Durchführung der mindestens einen Recyclingprozess-Optimierungsmaßnahme das Veranlassen eines Betriebs von mindestens einer der Vielzahl von physischen Komponenten der Anlage (102) mindestens teilweise auf Basis der mindestens einen Recyclingprozess-Optimierungsmaßnahme umfasst.

13. Computerprogrammprodukt, umfassend mindestens ein nichtflüchtiges computerlesbares Speichermedium, das darauf gespeicherten Computerprogrammcode aufweist, der bei Ausführung mit mindestens einem Prozessor (202) das Computerprogrammprodukt zur Folgendem konfiguriert:
Identifizieren von physischen Darstellungsdaten, die ein physisches Layout eines Recyclingprozesses darstellen, der einer Anlage (102) zugehörig ist, wobei die physischen Darstellungsdaten eine physische Darstellung einer Vielzahl von physischen Komponenten der dem Recyclingprozess zugehörigen Anlage (102), eine räumliche Position der physischen Komponenten der Anlage (102) und eine physische Darstellung einer Vielzahl von Zufuhrwegen, die der Vielzahl von physischen Komponenten der dem Recyclingprozess zugehörigen Anlage (102) zugehörig sind, umfassen, wobei eine erste physische Komponente (302) der Vielzahl von Komponenten der Anlage (102) eine erste Zufuhreingabe (306) und eine erste Zufuhrausgabe (310) beinhaltet, und eine zweite physische Komponente (304) der Vielzahl von physischen Komponenten der Anlage (102) eine zweite Zufuhreingabe (308) und eine zweite Zufuhrausgabe (312) beinhaltet, wobei die erste Zufuhrausgabe (310) dazu konfiguriert ist, eine erste Ausgabezufuhr auszugeben und die zweite Zufuhrausgabe (312) dazu konfiguriert ist, eine zweite Ausgabezufuhr auszugeben, wobei mindestens ein Teil der ersten Ausgabezufuhr mindestens teilweise durch einen ersten Recyclezufuhrweg (322) der Vielzahl von Zufuhrwegen zu der zweiten Zufuhreingabe (308) geleitet wird und mindestens ein Teil der zweiten Ausgabezufuhr mindestens teilweise durch einen zweiten Recyclezufuhrweg (322) der Vielzahl von Zufuhrwegen zu der ersten Zufuhreingabe (306) geleitet wird, wobei der erste Recyclezufuhrweg (322) dazu konfiguriert ist, mindestens teilweise mindestens einen Teil der zweiten Ausgabezufuhr zu einer ersten Kombiniervorrichtung (314) zu leiten;
Erzeugen eines virtuellen Recyclingprozessmodells, das dem der Anlage (102) zugehörigen Recyclingprozess entspricht, mindestens teilweise auf Basis der physischen Darstellungsdaten; und
Erzeugen von mindestens einer Recyclingprozess-Optimierungsmaßnahme mindestens teilweise auf Basis des virtuellen Recyclingprozessmodells.

## Revendications

1. Procédé mis en œuvre par ordinateur, comprenant :
l'identification (902) de données de représentation physique représentant un agencement physique d'un processus de recyclage associé à une usine (102), dans lesquelles les données de représentation physique comprennent une représentation physique d'une pluralité de composants physiques de l'usine (102) associée au processus de recyclage, un emplacement spatial des composants physiques de l'usine (102), et une représentation physique d'une pluralité de trajets d'acheminement associés à la pluralité de composants physiques de l'usine (102) associée au processus de recyclage, dans lequel un premier composant physique (302) de la pluralité de composants physiques de l'usine (102) inclut une première entrée d'acheminement (306), et une première sortie d'acheminement (310), et un deuxième composant physique (304) de la pluralité de composants physiques de l'usine (102) inclut une deuxième entrée d'acheminement (308), et une deuxième sortie d'acheminement (312), dans laquelle la première sortie d'acheminement (310) est configurée pour délivrer un premier acheminement de sortie et la deuxième sortie d'acheminement (312) est configurée pour délivrer un deuxième acheminement de sortie, dans lequel au moins une portion du premier acheminement de sortie est dirigée vers la deuxième entrée d'acheminement (308) au moins en partie par un premier trajet d'acheminement de recyclage (322) de la pluralité de trajets d'acheminement et au moins une portion du deuxième acheminement de sortie est dirigée vers la première entrée d'acheminement (306) au moins en partie par un deuxième trajet d'acheminement de recyclage (322) de la pluralité de trajets d'acheminement, dans lequel le premier trajet d'acheminement de recyclage (322) est configuré pour au moins en partie diriger au moins une portion du deuxième acheminement de sortie vers un premier combineur (314) ;
la génération (904) d'un modèle de processus de recyclage virtuel correspondant au processus de recyclage associé à l'usine (102) sur la base au moins en partie des données de représentation physique ; et
la génération (906) d'au moins une action d'optimisation de processus de recyclage sur la base au moins en partie du modèle de processus de recyclage virtuel.

2. Procédé mis en œuvre par ordinateur selon la revendication 1, comprenant en outre :
l'initiation (908) de la réalisation de l'au moins une action d'optimisation de processus de recyclage.

3. Procédé mis en œuvre par ordinateur selon la revendication 2, dans lequel l'initiation de la réalisation de l'au moins une action d'optimisation de processus de recyclage comprend :
le fait d'amener le fonctionnement d'au moins l'un de la pluralité de composants physiques de l'usine (102) sur la base au moins en partie de l'au moins une action d'optimisation de processus de recyclage.

4. Procédé mis en œuvre par ordinateur selon la revendication 1, comprenant en outre :
le fait d'amener (910) une interface utilisateur (600) à être affichée, dans laquelle l'interface utilisateur (600) comprend au moins l'un du modèle de processus de recyclage virtuel ou l'au moins une action d'optimisation de processus de recyclage.

5. Procédé mis en œuvre par ordinateur selon la revendication 1, dans lequel au moins une portion du premier acheminement de sortie est dirigée vers un troisième composant physique de la pluralité de composants physiques et au moins une portion du deuxième acheminement de sortie est dirigée vers un quatrième composant physique de la pluralité de composants physiques.

6. Procédé mis en œuvre par ordinateur selon la revendication 1, dans lequel le premier acheminement comprend au moins l'un des éléments suivants : du naphta, du distillat, du distillat lourd, des résidus d'hydrocraqueur.

7. Procédé mis en œuvre par ordinateur selon la revendication 1, dans lequel le deuxième acheminement comprend au moins l'un des éléments suivants : du propane, du butane, de l'essence, de l'huile légère, du gazole lourd, ou du slurry.

8. Procédé mis en œuvre par ordinateur selon la revendication 1, dans lequel la pluralité de composants physiques de l'usine (102) comprend au moins l'un d'un composant de craquage catalytique fluide ou d'un composant d'hydrocraquage.

9. Procédé mis en œuvre par ordinateur selon la revendication 1, dans lequel le processus de recyclage est un processus de recyclage à entrées multiples et à sorties multiples.

10. Procédé mis en œuvre par ordinateur selon la revendication 1, dans lequel le premier combineur (314) est configuré pour combiner une pluralité de sous-produits générés par le premier composant physique (302) avec un ou plusieurs ingrédients d'entrée associés au deuxième composant physique (304) pour créer le deuxième acheminement d'entrée.

11. Appareil (200) comprenant au moins un processeur (202) et au moins une mémoire non transitoire (204), incluant des instructions codées par ordinateur stockées sur celle-ci, les instructions codées par ordinateur, avec l'au moins un processeur (202), amènent l'appareil (200) à :
identifier des données de représentation physique représentant un agencement physique d'un processus de recyclage associé à une usine (102), dans lesquelles les données de représentation physique comprennent une représentation physique d'une pluralité de composants physiques de l'usine (102) associée au processus de recyclage, un emplacement spatial des composants physiques de l'usine (102), et une représentation physique d'une pluralité de trajets d'acheminement associés à la pluralité de composants physiques de l'usine (102) associée au processus de recyclage, dans lequel un premier composant physique (302) de la pluralité de composants physiques de l'usine (102) inclut une première entrée d'acheminement (306), et une première sortie d'acheminement (310), et un deuxième composant physique (304) de la pluralité de composants physiques de l'usine (102) inclut une deuxième entrée d'acheminement (308), et une deuxième sortie d'acheminement (312), dans laquelle la première sortie d'acheminement (310) est configurée pour délivrer un premier acheminement de sortie et la deuxième sortie d'acheminement (312) est configurée pour délivrer un deuxième acheminement de sortie, dans lequel au moins une portion du premier acheminement de sortie est dirigée vers la deuxième entrée d'acheminement (308) au moins en partie par un premier trajet d'acheminement de recyclage (322) de la pluralité de trajets d'acheminement et au moins une portion du deuxième acheminement de sortie est dirigée vers la première entrée d'acheminement (306) au moins en partie par un deuxième trajet d'acheminement de recyclage (322) de la pluralité de trajets d'acheminement, dans lequel le premier trajet d'acheminement de recyclage (322) est configuré pour au moins en partie diriger au moins une portion du deuxième acheminement de sortie vers un premier combineur (314) ;
générer un modèle de processus de recyclage virtuel correspondant au processus de recyclage associé à l'usine (102) sur la base au moins en partie des données de représentation physique ; et
générer au moins une action d'optimisation de processus de recyclage sur la base au moins en partie du modèle de processus de recyclage virtuel.

12. Appareil (200) selon la revendication 11, dans lequel les instructions codées par ordinateur, en outre avec l'au moins un processeur (202), amènent l'appareil (200) à :
initier la réalisation d'au moins une action d'optimisation de processus de recyclage, dans laquelle l'initiation de la réalisation de l'au moins une action d'optimisation de processus de recyclage comprend le fait d'amener le fonctionnement d'au moins l'un de la pluralité de composants physiques de l'usine (102) sur la base au moins en partie de l'au moins une action d'optimisation de processus de recyclage.

13. Produit de programme informatique, comprenant au moins un support de stockage non transitoire lisible par ordinateur présentant un code de programme informatique stocké sur celui-ci qui, lors de son exécution avec au moins un processeur (202), configure le produit de programme informatique pour :
identifier des données de représentation physique représentant un agencement physique d'un processus de recyclage associé à une usine (102), dans lesquelles les données de représentation physique comprennent une représentation physique d'une pluralité de composants physiques de l'usine (102) associée au processus de recyclage, un emplacement spatial des composants physiques de l'usine (102), et une représentation physique d'une pluralité de trajets d'acheminement associés à la pluralité de composants physiques de l'usine (102) associée au processus de recyclage, dans lequel un premier composant physique (302) de la pluralité de composants physiques de l'usine (102) inclut une première entrée d'acheminement (306), et une première sortie d'acheminement (310), et un deuxième composant physique (304) de la pluralité de composants physiques de l'usine (102) inclut une deuxième entrée d'acheminement (308), et une deuxième sortie d'acheminement (312), dans laquelle la première sortie d'acheminement (310) est configurée pour délivrer un premier acheminement de sortie et la deuxième sortie d'acheminement (312) est configurée pour délivrer un deuxième acheminement de sortie, dans lequel au moins une portion du premier acheminement de sortie est dirigée vers la deuxième entrée d'acheminement (308) au moins en partie par un premier trajet d'acheminement de recyclage (322) de la pluralité de trajets d'acheminement et au moins une portion du deuxième acheminement de sortie est dirigée vers la première entrée d'acheminement (306) au moins en partie par un deuxième trajet d'acheminement de recyclage (322) de la pluralité de trajets d'acheminement, dans lequel le premier trajet d'acheminement de recyclage (322) est configuré pour au moins en partie diriger au moins une portion du deuxième acheminement de sortie vers un premier combineur (314) ;
générer un modèle de processus de recyclage virtuel correspondant au processus de recyclage associé à l'usine (102) sur la base au moins en partie des données de représentation physique ; et
générer au moins une action d'optimisation de processus de recyclage sur la base au moins en partie du modèle de processus de recyclage virtuel.
